# EUROPEAN PATENT SPECIFICATION

(11) **EP 3 863 393 B1**
(45) Date of publication and mention of the grant of the patent: **21.05.2025**
(21) Application number: 19871596.3
(22) Date of filing: 11.10.2019
(51) Int. Cl.: A01B 73/04, A01B 21/04, A01B 21/08

(54) **ROTARY HOE ARRANGEMENT AND THE USE OF A ROTARY HOE ARRANGEMENT FOR HOEING**
DREHHACKANORDNUNG UND VERWENDUNG EINER DREHHACKANORDNUNG ZUM HACKEN
ARRANGEMENT DE HOUE ROTATIVE ET UTILISATION D'UN ARRANGEMENT DE HOUE ROTATIVE POUR LE BINAGE

(30) Priority: 11.10.2018 DK PA201800716
(43) Date of publication of application: 18.08.2021
(73) Proprietor: GST Denmark ApS, 6240 Løgumkloster (DK)
(72) Inventor: GUBI, Jacob Lindholm, 6240 Løgumkloster (DK); HOLM, Jan, 6534 Agerskov (DK); JENSEN, Bent, 6240 Løgumkloster (DK)
(74) Representative: Patrade A/S
(86) International application number: PCT/DK2019/050315
(87) International publication number: WO 2020/074052

(56) References cited:
- EP-A1- 2 366 272
- EP-A1- 3 146 820
- WO-A1-2006/034961
- US-A- 3 529 674
- US-A- 4 312 409
- US-A1- 2012 298 388
- US-A1- 2015 129 250
- US-A1- 2016 050 838
- US-A1- 2017 172 052

## Description

### Field of the Invention

The present invention relates to a rotary hoe arrangement, a vehicle connected to a rotary hoe arrangement, and the use of a rotary hoe arrangement for hoeing.

### Background of the Invention

Rotary hoes are well-known in the art. Rotary hoes are versatile and come in many sizes and with a vast variety of features depending on intended use.

One use of the rotary hoe is to remove weeds that emerge in the field. For this purpose, farmers prefer rotary hoes with long wings that can extend over a large part of the field, thus decreasing the time spent working in the field.

Thus, the problem with present day rotary hoes is that the long wingspan of the rotary hoe complicates storage, and transport of the machine from one location to another.

Thus, there is a need for solutions, which can decrease the time for hoeing and sowing of a field.

WO 2006/034961 A1 discloses a jointed rockshaft with angularly adjustable segments having a joint structure facilitating the adjustment of the rotational angle of rockshaft segments relative to each other. The purpose of the flexible joint is to ensure the correct operating depth of tillage and seeding tools.

US 4312409 A1 discloses a rotary hoe implement with upstanding spacer members for connecting to a tool bar for drafting by a tractor.

EP 2366272 A1 discloses a harvesting attachment comprising an inner part and at the two lateral ends of which the middle parts and outer parts are pivotable. The harvesting attachment can be folded into a transport position, where the outer parts relative to the middle parts are pivoted upwards and inwards and the middle parts are pivoted upwards.

### Object of the Invention

It is an object of the invention to overcome the limitations of the prior art by providing a rotary hoe arrangement capable of decreasing the time needed for hoeing.

### Description of the Invention

An object of the invention is achieved by a rotary hoe arrangement for weeding a field according to any of claims 1 to 11. The rotary hoe arrangement comprises a tool bar.

The tool bar comprises a plurality of hoe wheels along the tool bar.

The tool bar further comprises a stationary central bar dividing the tool bar into two foldable wing sections, each wing section comprises an inner wing connected to an outer wing having a distal wing end.

The tool bar has an operational position, where the central bar, inner wings and outer wings define a straight work line, and a folded position, where the wing sections are folded for transportation to and from a field.

The skilled person would understand the width of the rotary hoe arrangement as the maximum extend of the rotary hoe arrangement along the work line.

The rotary hoe arrangement will be able to hoe a field when in the operational position as the width of the rotary hoe arrangement is maximized in the operational position.

The rotary hoe arrangement will be able to be transported to and from a field when in the folded position, because the width of the rotary hoe arrangement is minimized in the operational position.

Each inner wing is pivotably engaged with the central bar. Each inner wing pivots in an inner plane between an inner operational position and an inner folded position. Each inner wing extends along the straight work line, when positioned in the operational position. Each inner wing extends upwardly and substantially perpendicular to the straight work line, when in the inner folded position.

The inner wing extends vertically upwardly, which results in a rotary hoe arrangement, which is very compactly packed i.e. having a high number of rotary hoes per volume. In this case, the straight work line and the vertical axis define the inner plane in which each inner wing pivots.

The skilled person would recognize that when one of the inner wings pivots between the inner operational position and inner folded position, then will the outer wing connected to inner wing pivot in parallel to the inner plane.

Each wing section may be 6 m long and the rotary hoe arrangement would become too high to be transported, if each outer wing just pivoted with the corresponding inner wing.

Each outer wing is pivotably engaged with the corresponding inner wing. Each outer wing pivots in an outer plane, which outer plane is tilted relative to the corresponding inner plane between an outer operational position and an outer folded position.

Each outer wing extends along the work line, when positioned in the outer work position. The distal wing end of each outer wing substantially faces the central bar and the outer wing is parallel to the corresponding inner wing and upwardly in the outer plane, when the outer wing is positioned in the outer folded position.

If each wing section of a rotary hoe arrangement has an inner wing in an inner operational position and an outer wing positioned in an outer folded position and both inner wings are pivoted from the inner operational position to the inner folded position, then the entire height of the rotary hoe arrangement will be substantially lower than if the outer wings were not pivotable.

This enables the rotary hoe arrangement to have longer wing sections while still being transportable, this increases the area which is hoed per pass and thus increases the efficiency.

Each outer wing is pivotal in the outer plane, which outer plane is tilted relative to the corresponding inner plane, this causes an off-set between the inner and outer wing of a wing section when the outer wing is in the outer folded form, such that the width of the rotary hoe arrangement decreases.

The transportation of rotary hoe arrangement is eased with decreasing width.

In an aspect of the invention, the central bar has a central bar width adapted for forming an equipment space between the wing sections.

An increase in the central bar width will cause the width of rotary hoe arrangement in the folded position and this will make the transportation of the rotary hoe arrangement more difficult, but this enables the rotary hoe arrangement to transport extra equipment.

The extra equipment space makes the rotary hoe arrangement more versatile as it may solve two tasks at the same time.

The skilled person would recognize that the equipment space is possible due to the wing sections, where each outer wing is pivotable in the outer plane which causes a decrease in the width of rotary hoe arrangement in the folded position. The decrease enables the central bar width to be increased thereby forming the equipment space between the wing sections and hoe wheels.

In an aspect of the invention, the rotary hoe arrangement comprises a sowing machine positioned in the equipment space.

Normally it would be very time consuming and expensive to sow after hoeing as the farmer must drive all the passes once more. However, the sowing machine positioned in the equipment space enables the farmer to hoe and sow at the same time. Thereby decreasing costs and time consumed.

The above mentioned case is especially advantage when hoeing in the winter. If the farmer at the same time sows grass or the like, then the farmer will reduce the amount of weed on the field. Furthermore, the grass is excellent at holding (i.e. storing) nitrates, which is beneficial to the crop which will be sowed in the spring.

The inner wing may be pivotably engaged with the central bar by a 90 degree folding joint.

Opposite to the central bar the inner wing may be pivotably engaged with the outer wing by a 180 degree folding joint.

In an aspect of the invention, each outer plane forms a 38-48 degrees angle with the corresponding inner plane.

The angle between the outer plane and corresponding inner plane enables a decrease in the width of the rotary hoe arrangement when in a folded position and/or an increase in the central bar width.

In an aspect of the invention, each outer plane forms a 41-45-degree angle with the corresponding inner plane.

The angle between the outer plane and corresponding inner plane enables a decrease in the width of the rotary hoe arrangement when in a folded position and/or an increase in the central bar width.

In an aspect of the invention, each outer plane forms a 43 degrees angle with the corresponding inner plane.

The angle between the outer plane and corresponding inner plane enables a decrease in the width of the rotary hoe arrangement when in a folded position and/or an increase in the central bar width.

The folding joint may comprise a pair of parallel inner walls facing each other and extending from the inner wing, a pair of parallel outer walls extending from the outer wing, the inner and outer walls are substantially parallel with the outer plane and define a channel.

The folding joint may be positioned at the transition between the inner wing and the outer wing.

The inner and outer walls may be interconnected by a transverse rod, which define an axis of rotation. The transverse rod is positioned distal to the inner and outer wings.

The folding joint may comprise an inner joint element being positioned in the channel and being pivotally connected to the inner walls, the inner joint element has an inner joint element end extending partly around the transverse rod.

The folding joint may comprise an outer joint element being positioned in the channel and being pivotally connected to the outer walls, the outer joint element has an outer joint element end connected to the inner joint element end.

The folding joint may comprise a piston connected to the inner wing and in an opposite end relative to the inner wing connected to the inner joint element for moving the outer wing between the folded position and the operational position.

Thereby, the outer wing can be pivotally moved between an operational position to the folded position and back in a controlled way.

In an aspect of the invention, the tool bar may comprise a hoe rack. The hoe rack may comprise a pair of extension plates having a rod extending between the pair of extension plates. The rod may be substantially parallel to the tool bar. One or more hoe arms may be rotatably connected to the rod and may be connected to one or more rotary hoes. The rod defines the axis of rotation. If the rotary hoe arrangement is in an operation position then the axis of rotation substantially corresponds to straight work line, although there may be a slight off-set. The tool bar may further comprise a biasing system for applying a biasing force to one or more hoe arms and thus to the one or more rotary hoes. The effect of the biasing system is that an optimum field penetration is ensured.

The tool bar may comprise a plurality of hoe racks.

The one or more hoe arms of the hoe rack may have one or more anvils extending below the tool bar for engaging with the tool bar and preventing further rotation, the one or more anvils are adapted for engaging with the tool bar.

There will may one anvil per hoe arm.

The biasing system may be adjusted such that each hoe arm and thus each rotary hoe attached to said arms experience a biasing force equal to 10-30 kg (100-300 N), or more optimum 15-25 kg (150-250 N) or most optimum 20 kg (200 N).

A biasing force equal to 20 kg has in tests proven to have the best field penetration.

The technical effect of the biasing system and the one or more anvils extending below the tool bar is that the hoe arms and rotary hoes are stationary during folding and unfolding of the inner and outer wings by the biasing system forcing the one or more anvils towards the tool bar. Thereby, unwanted and uncontrolled movement is prevented and thus the risk of collision between rotary hoes is prevented, which is a risk during folding and unfolding of the tool bar.

In an aspect of the invention, the biasing system may comprise a biasing arm extending from the tool bar and having a displaceable hand end connected to a hoe arm. Displacement of the displaceable hand end causes an increase or a decrease of the biasing force on the hoe arm and thus on the rotary hoe.

The displaceable hand end may be linearly displaceable.

The skilled person would know how to make the hand end displaceable, the hand end could be displaceable by using pneumatics or hydraulics or an electrified actuator or a membrane.

In an embodiment, the biasing arm extends above the tool bar.

In another embodiment, the biasing arm extends below the tool bar.

Thereby, the biasing force on the one or more hoe arms and corresponding rotary hoes can be controlled individually, which ensures a more uniform treatment of a field.

In an aspect of the invention, the biasing system may comprise
- one or more torque springs positioned next to hoe arms along the rod, the one or more torque springs having a first torque spring arm connected to a hoe arm and a second torque spring arm,
- a biasing arm extending from the tool bar and having a displaceable hand end connected to a pole positioned transverse to the second torque spring arm for applying a biasing force to the one or more torque springs.

The biasing force is applied to the second torque spring arm by displacing the displaceable hand end and thereby said pole relative to the second torque spring arms. Thereby, a single biasing arm can control the biasing force on several hoe arms and thereby several hoe wheels. This will greatly reduce the complexity of the tool bar and thereby reduce the overall cost and running costs relative to the previously mentioned embodiments since there are fewer biasing arms.

The skilled person would know how to make the hand end displaceable, the hand end could be displaceable by using pneumatics or hydraulics or an electrified actuator or a membrane.

In an aspect of the invention, the biasing arm may further comprise an intermediate piece between the hand end and the pole, the intermediate piece may be rotatable connected to the rod.

The intermediate piece ensures a controlled and consistent movement of the pole relative to the second torque spring arms

In an embodiment, the intermediate piece comprises a curved part, where the biasing arm is rotatably connected to a first end of said curved part and the pole is connected to an opposite end of said curved part and the curved part partly encircles the rod.

The effect of the intermediate piece having a curved shaped is that it becomes easier to control the biasing force on the torque springs as the pole will apply a force on the same place on the second torque spring arms.

The above mentioned embodiments of hoe racks and biasing systems may with great effect be used with a foldable tool bar as the risk of collisions is limited by the hoe racks with a biasing system. However, the hoe racks and biasing systems can also be used with great effect on a non-foldable tool bar as the biasing systems ensure a suitable penetration of the rotary hoes.

An object of the invention is achieved by a vehicle connected to rotary hoe arrangement.

An object of the invention is achieved by use of a rotary hoe arrangement for weeding a field.

An object of the invention is achieved by use of a rotary hoe arrangement comprising a sowing machine for weeding and sowing a field at the same time.

An object of the invention is achieved by use of a vehicle for weeding a field.

Although well described above, a person skilled in the art may appreciate a similar description, which description may be an equivalent description. **In** such aspects, the following description may serve to support the disclosure or function as an example. Structural features recited in the following may be found to be supported in figures as required. A person skilled in the art will readily be able to identify technical features in the figures.

In an exemplary embodiment, a rotary hoe arrangement comprising a wing arrangement comprising at least two wing sections, each wing section configured to support multiple hoe arms each with a rotary element. The wing arrangement may be configured with a wing pivot between two wing sections arranged for the wing sections to pivot relative to each other in a section plane about a wing section angle and to fold the wing sections. The section plane may be seen in figures as an outer plane.

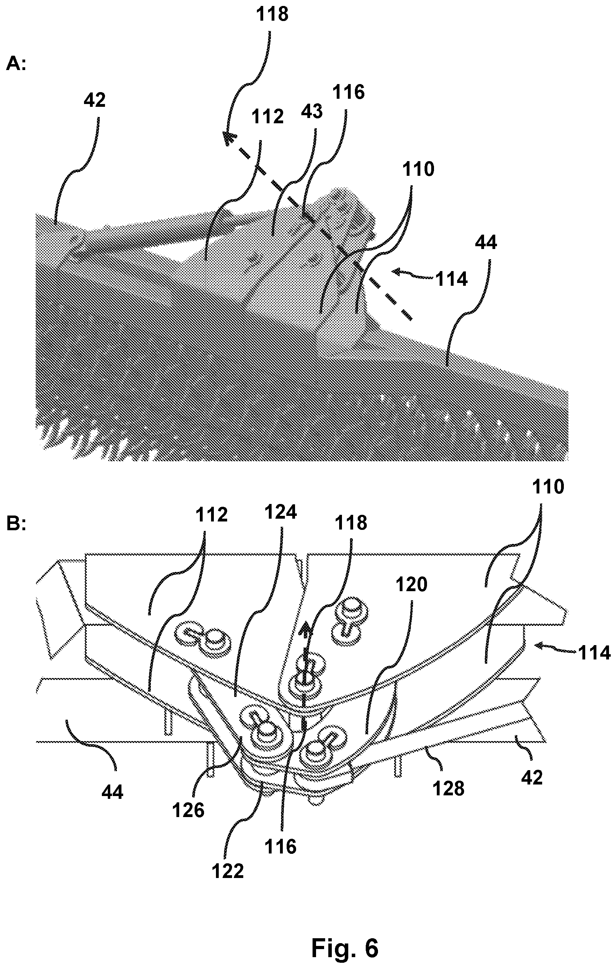

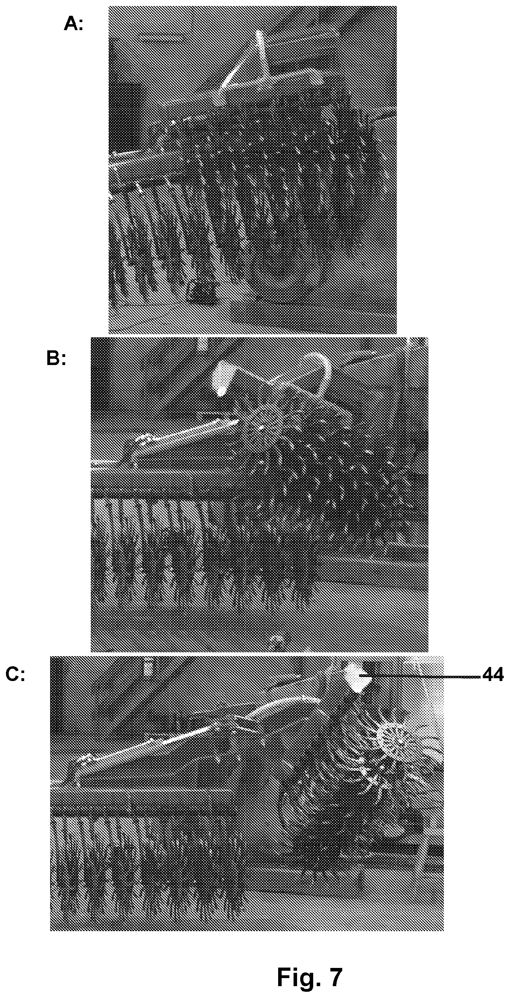

The wing pivot may be implemented as seen on the figures enclosed. The wing pivot may be as disclosed in figure 6. The wind pivot may be operated as shown in figure 7. A person skilled in the art will experiment with faces and angles to improve the fold of wing sections including enablement of rotary stars to be sandwiched, either with no overlap or partial overlap, and to optimize weight distribution and constructional moments. The wing pivot may be a foldable connection folding two sections in say 180-degrees angle.

The rotary hoe arrangement of the exemplary embodiment may further comprise a support wing pivot at one of the two wing sections and configured to pivot the one wing section relative to a support in a support plane in a support angle. The support wing pivot may bend the wing arrangement relative to the support. The support plane may be seen from the figures as an inner plane. The support wing pivot may be a bendable connection bending the wing arrangement in say 90-degrees.

The rotary arrangement may be configured with the support wing pivot and the section pivot arranged in an angle relative to each other, such that the section plane and the support plane intersect in an intersection angle. The angle between the planes is 35-55 degrees, optionally 40-50 degrees or say about 43-47 degrees. A starting angle may be 43 degrees.

The rotary hoe arrangement of the exemplary embodiment may further comprise a support configured with connection means for connection to a vehicle. The rotary hoe arrangement may be arranged with the support supporting the support wing pivot attached to one end of an inner wing section and configured for an operational position relative to the vehicle in an operational support angle and for a transport position relative to the vehicle in a transport support angle.

In an exemplary embodiment, the support and the least two wing sections are arranged with the wing pivot at the opposite end of the inner wing section, and with the wing pivot configured for an operational position relative to the vehicle in an operational section angle and for a transport position relative to the vehicle in a transport section angle.

In an exemplary embodiment, the support wing pivot and the wing pivot are arranged, such that in the operational positon the operational support angle and the operational section angle align the wing sections and extend from the support in a substantial linear way and with an operational extent from the support. The operational extent may be 9 m or more, 10 m or more, or 12 m or more.

In an exemplary embodiment, the support wing pivot and the wing pivot are arranged, such that in the transport positon, the operational support angle and the operational section angle fold the wing sections with a height and a width from the support.

In an exemplary embodiment, the support has a center section and in one direction supports a first wing arrangement configured to extend in a first direction when in the operational position and a second wing arrangement configured to extend in a second direction and opposite direction of the first direction when in the operational position. The rotary hoe arrangement is configured such that the center section has a void space when the first wing arrangement and the second wing arrangement are in the transport position.

The void space is complementary in shape to the shape of a sow arrangement, such that the sow arrangement can fit into the void space.

In an exemplary embodiment the support further supports a center section configured to support multiple hoe arms each with a rotary element that are aligned with the wing sections when in the operational position.

The rotary hoe arrangement wherein the support is configured with a platform, the platform arranged to support a sow arrangement.

In an exemplary embodiment an agricultural arrangement comprising a rotary hoe arrangement and a sow arrangement. In such agricultural arrangement, the rotary hoe arrangement may be as disclosed or according to the figures. In such agricultural arrangement, the sow arrangement may be any off the shelf sow arrangement or according to the figures.

An exemplary embodiment is use of a vehicle comprising a rotary hoe arrangement and a sow arrangement.

In a particular use, the vehicle comprises a rotary hoe arrangement as disclosed or according to the figures. Such use may involve placement of a sow arrangement in front of the vehicle. In an aspect the sow arrangement is arranged in connection with the rotary hoe arrangement. In a particular aspect, the sow arrangement is placed in a void space of the rotary hoe arrangement in a transport position, that is when sections of the rotary hoe arrangement is bend or folded.

In an exemplary embodiment a vehicle comprising a rotary hoe arrangement in a transport position, the rotary hoe arrangement surrounds a sow arrangement in transport position, wherein the use in the transport position in a transport direction has a width of less than 4 meters, less than 3.2 m, or less than 3 meters and a height of less than 4 meters or less than 3 meters.

In an exemplary embodiment, a rotary hoe arrangement in an operation position, wherein the use of the vehicle in an operation direction with the rotary hoe arrangement in the operational position the rotary hoe arrangement extends more than 10 meters or about 12 meters or more.

### Description of the Drawing

Embodiments of the invention will be described in the figures, whereon:
- Fig. 1: illustrates a vehicle with a rotary hoe arrangement and a sowing machine;
- Fig. 2: illustrates a rotary hoe arrangement in an operational position and a folded position;
- Fig. 3: illustrates a rotary hoe arrangement in a folded position;
- Fig. 4: illustrates a top view of a rotary hoe arrangement in a folded position;
- Fig. 5: illustrates a wing section;
- Fig. 6: illustrates a joint between an inner wing and an outer wing;
- Fig. 7: illustrates an unfolding of an outer wing;
- Fig. 8: illustrates a first embodiment of a hoe rack;
- Fig. 9: illustrates a second embodiment of a hoe rack;
- Fig. 10: illustrates a third embodiment of a hoe rack; and
- Fig. 11: illustrates a fourth embodiment of a hoe rack.

### Detailed Description of the Invention

| **Item** | **No** |
|---|---|
| Rotary hoe arrangement | 10 |
| Tool bar | 20 |
| Operational position | 22 |
| Folded position | 24 |
| Central bar | 25 |
| Hoe wheels | 30 |
| Wing section | 40I, 40II |
| 90 degree folding joint | 41I, 41II |
| Inner wing | 42I, 42II |
| 180 degree folding joint | 43I, 43II |
| Outer wing | 44I, 44II |
| Distal wing end | 45I, 45II |
| Straight work line | 50 |
| Hoe rack | 60 |
| Pair of extension plates | 62 |
| Rod | 64 |
| Hoe arm(s) | 66 |
| Anvil | 67 |
| Rotary hoe(s) | 68 |
| Biasing system | 70 |
| Biasing arm | 72 |
| Hand end | 74 |
| Pole | 75 |
| Torque spring | 76 |
| First torque spring arm | 77 |
| Second torque spring arm | 78 |
| Intermediate piece | 79 |
| Sowing machine | 80 |
| Equipment space | 90 |
| Vehicle | 100 |
| Inner walls | 110 |
| Outer walls | 112 |
| Channel | 114 |
| Transverse rod | 116 |
| Axis of rotation | 118 |
| Inner joint element | 120 |
| Inner joint element end | 122 |
| Outer joint element | 124 |
| Outer joint element end | 126 |
| Piston | 128 |

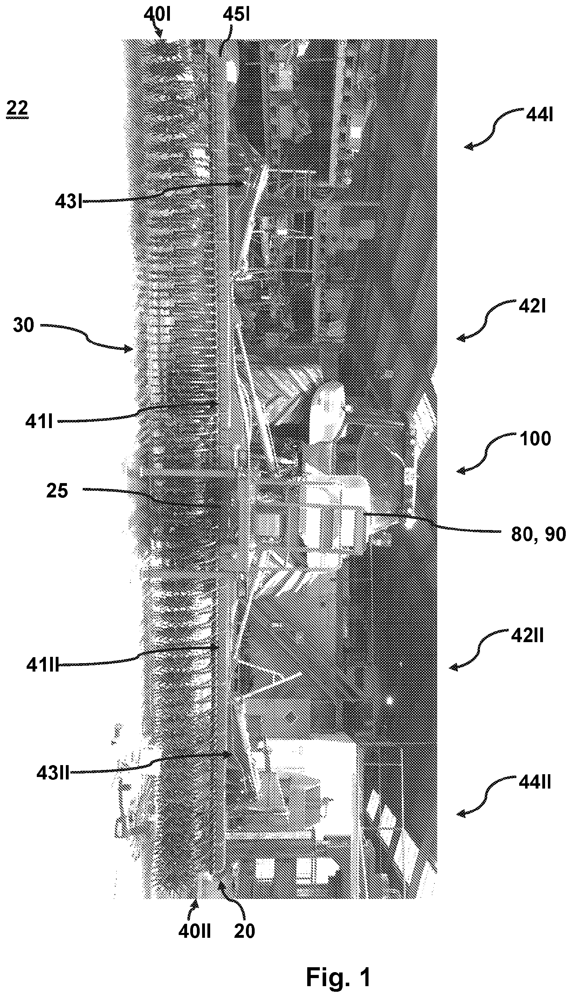

Fig. 1 illustrates a vehicle 100 with a rotary hoe arrangement 10 and a sowing machine 90.

The rotary hoe arrangement 10 is positioned in an operational position 22 and would be ready to hoe and sow if the vehicle 100 was in a field.

The rotary hoe arrangement 10 comprises a tool bar 20 with a central bar 25 and a first and a second wing section 40I, 40II, which extend along a straight work line 50 when the rotary hoe arrangement 10 is positioned in an operational position 22. The central bar 25 is on both sides connected to the first and the second wing section 40I, 40II.

Each wing section 40I, 40II comprises an inner wing 42I, 42II pivotably engaged with the central bar 25 by a 90 degree folding joint 41I, 41II.

Opposite to the central bar 25 the inner wing 42I, 42II is pivotably engaged with an outer wing 44I, 44II by a 180 degree folding joint 43I, 43II.

Each outer wing 44I, 44II has a distal wing end 45I, 45II, which when the rotary hoe arrangement 10 is positioned in an operational position 22 define a maximum width of the rotary hoe arrangement 10.

The sowing machine 90 is positioned in the equipment space 90.

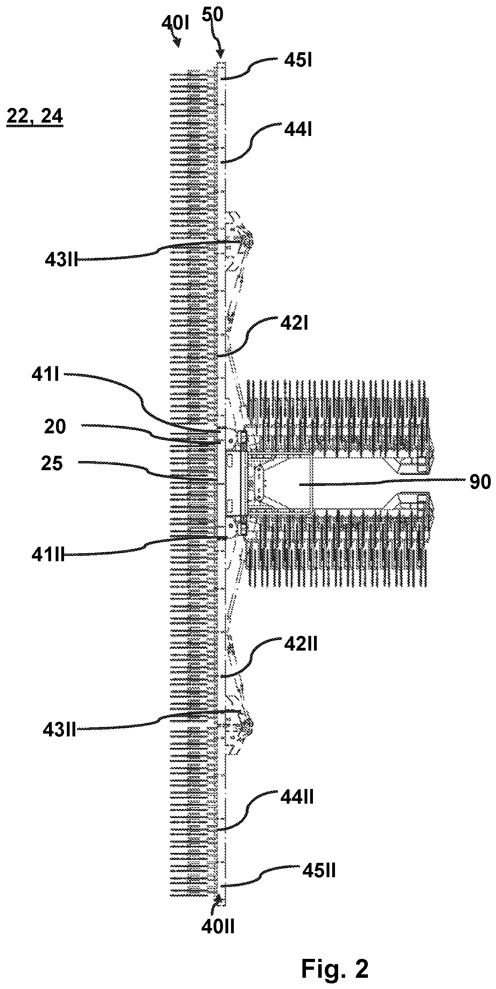

Fig. 2 illustrates a rotary hoe arrangement 10 in an operational position 22 and a folded position 24.

The skilled person would know that the rotary hoe arrangement 10 cannot be in both the operational position 22 and the folded position 24 at the same time, however Fig. 2 illustrates the differences between the two positions, such as a maximum and a minimum width of the rotary hoe arrangement 10.

The rotary hoe arrangement 10 comprises a tool bar 20 with a central bar 25 and a first and a second wing section 40I, 40II, which extend along a straight work line 50 when the rotary hoe arrangement 10 is positioned in an operational position 22. The central bar 25 is on both sides connected to the first and the second wing section 40I, 40II.

Each wing section 40I, 40II comprises an inner wing 42I, 42II pivotably engaged with the central bar 25 by a 90 degree folding joint 41I, 41II.

Opposite to the central bar 25 the inner wing 42I, 42II is pivotably engaged with an outer wing 44I, 44II by a 180 degree folding joint 43I, 43II.

Each outer wing 44I, 44II has a distal wing end 45I, 45II, which when the rotary hoe arrangement 10 is positioned in an operational position 22 define a maximum width of the rotary hoe arrangement 10.

The rotary hoe arrangement 10 is peculiar in that it has an equipment space 90 in the folded position 24 and in the operational position 22.

This enables the rotary hoe arrangement 10 to have more functions other than hoeing.

Furthermore, the extra equipment can be transported with the rotary hoe arrangement 10 as a single unit since the equipment space 90 is also available in the folded position.

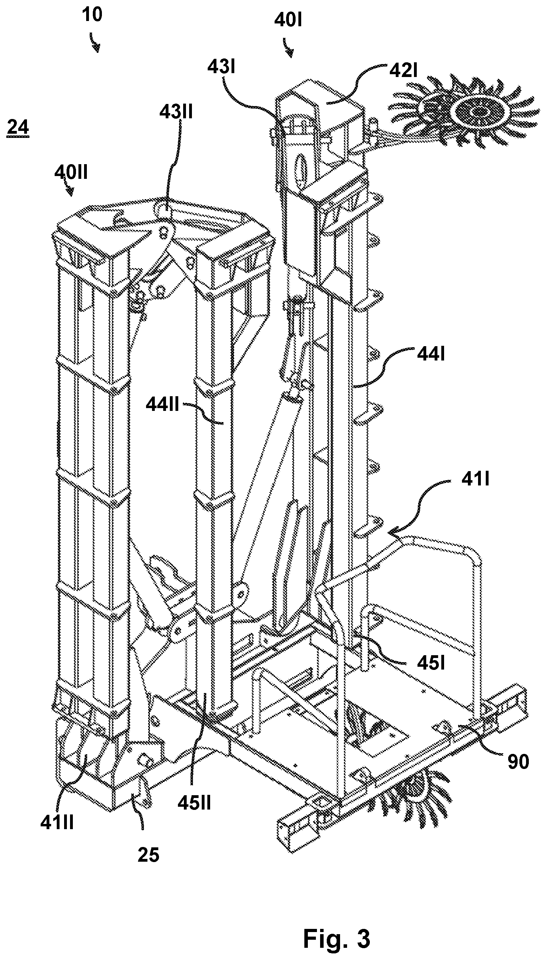

Fig. 3 illustrates a rotary hoe arrangement 10 in a folded position 24.

The rotary hoe arrangement 10 is shown with only few hoe wheels 30 but the tool bar 25 would have hoe wheels 30 along its entire width when in intended use.

The rotary hoe arrangement 10 comprises a tool bar 20 with a central bar 25 and a first and a second wing section 40I, 40II, which extend along a straight work line 50 when the rotary hoe arrangement 10 is positioned in an operational position 22. The central bar 25 is on both sides connected to the first and the second wing section 40I, 40II.

Each wing section 40I, 40II comprises an inner wing 42I, 42II pivotably engaged with the central bar 25 by a 90 degree folding joint 41I, 41II.

Opposite to the central bar 25 the inner wing 42I, 42II is pivotably engaged with an outer wing 44I, 44II by a 180 degree folding joint 43I, 43II.

Each outer wing 44I, 44II has a distal wing end 45I, 45II, which when the rotary hoe arrangement 10 is positioned in an operational position 22 define a maximum width of the rotary hoe arrangement 10.

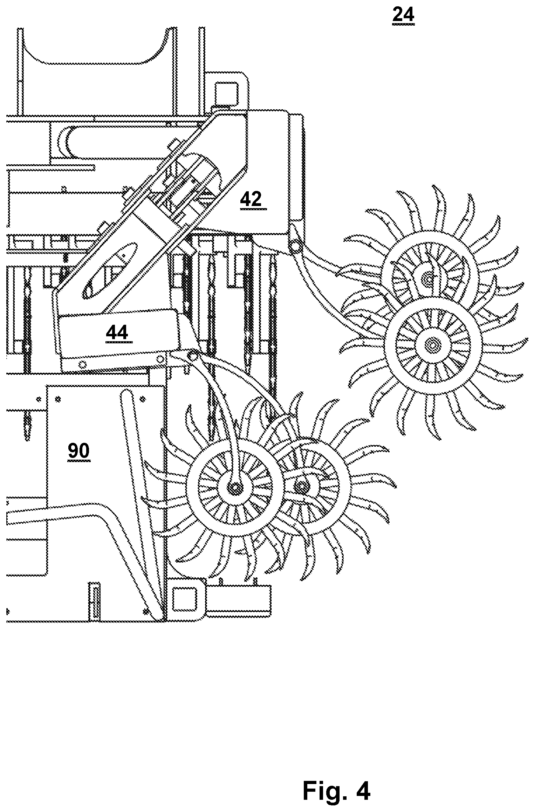

Fig. 4 illustrates a top view of a rotary hoe arrangement 10 in a folded position 24. The fig. 4 discloses how hoe wheels 30 are positioned relative to each other and that there is equipment space 90.

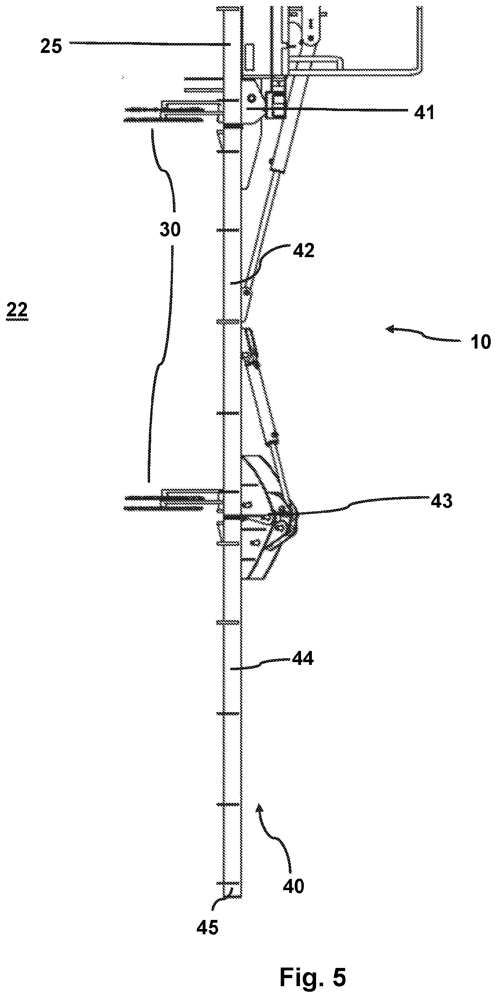

Fig. 5 illustrates a wing section 40.

The wing section 40 comprises an inner wing 42 pivotably engaged with the central bar 25 by a 90 degree folding joint 41.

Opposite to the central bar 25 the inner wing 42 is pivotably engaged with an outer wing 44 by a 180 degree folding joint 43.

The outer wing 44 has a distal wing end 45 which when the rotary hoe arrangement 10 is positioned in an operational position 22 define a maximum width of the rotary hoe arrangement 10.

Fig. 6 illustrates a joint between an inner wing 42 and an outer wing 44.

The joint is a 180 degree folding joint 43.

Fig. 6A and 6B show to different perspectives.

Fig. 6B illustrates the 180 degree folding joint 43 in greater detail. The folding joint 43 is positioned between the inner wing 42 and the outer wing 44.

The folding joint 43 comprises a pair of parallel inner walls 110 facing each other and extending from the inner wing 42, a pair of parallel outer walls 112 extending from the outer wing 44, the inner and outer walls 110,112 are parallel with the outer plane and defining a channel 114.

The inner walls 110 are named inner walls 110, because they extend from the inner wing 42. The outer walls 112 are named inner walls 12, because they extend from the outer wing 44.

The inner and outer walls 110, 112 are interconnected by a transverse rod 116, which defines an axis of rotation 118. The transverse rod 116 is positioned distal to the inner and outer wings 42, 44.

The folding joint 43 comprises an inner joint element 120 being positioned in the channel 114 and being pivotally connected to the inner walls 110, the inner joint element 120 has an inner joint element end 122 extending partly around the transverse rod 116.

The folding joint 43 comprises an outer joint element 124 being positioned in the channel 114 and being pivotally connected to the outer walls 112, the outer joint element 124 has an outer joint element end 126 connected to the inner joint element 120.

The folding joint 43 comprises a piston 126 connected to the inner wing 42 and connected to the inner joint element 120 for moving the outer wing 44 between the folded position 24 and the operational position 22.

Fig. 7 illustrates an unfolding of an outer wing 44.

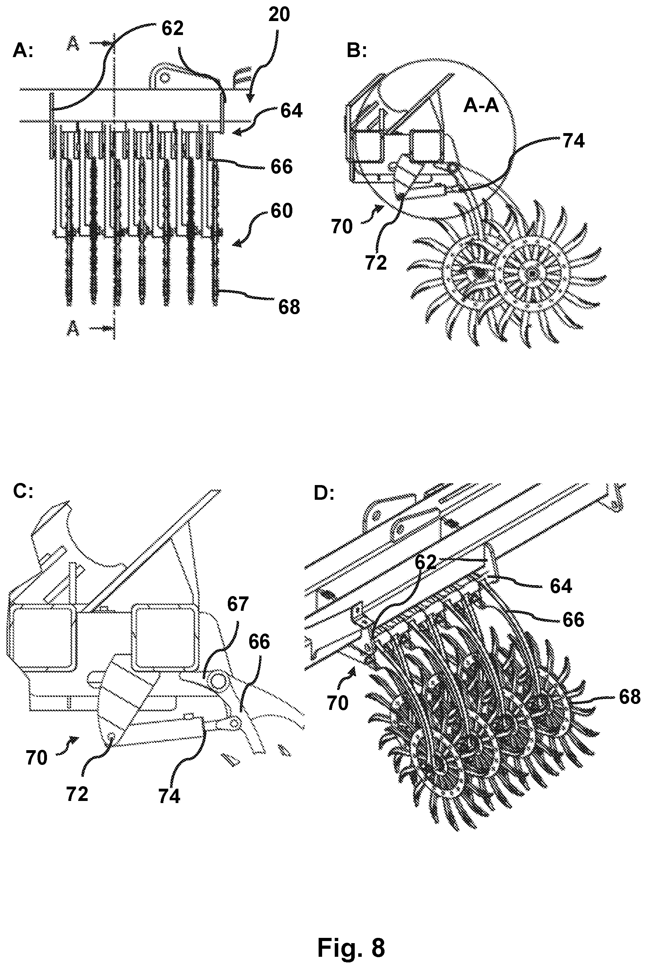

Fig. 8 illustrates a first embodiment of a hoe rack 60 from four different views. The hoe rack 60 is positioned along a tool bar 20.

The hoe rack 60 comprises a pair of extension plates 62 having a rod 64 extending between the pair of extension plates 62, the rod 64 being substantially parallel to the tool bar 20.

The hoe rack 60 further comprises hoe arms 66 rotatably connected to the rod 62 and distal to the rod 62 being connected to rotary hoes 68.

The hoe arms 66 of the hoe rack 60 comprise anvils 67 extending below the tool bar 20, the anvils 67 are adapted for engaging with the tool bar 20. Thereby, unwanted clockwise rotation is prevented.

The hoe rack 60 further comprises a biasing system 70 for applying a biasing force to the one or more hoe arms 66 and the one or more rotary hoes 68.

The biasing system 70 together with the anvils 67 ensures that rotary hoes 68 do not collide, if the tool bar 20 is of the kind which can be folded and unfolded.

The biasing system 70 comprises biasing arms 72 extending from below the tool bar 20. The biasing arms 72 have displaceable hand ends 74 connected to hoe arms 66 for applying the biasing force to the hoe arms 66.

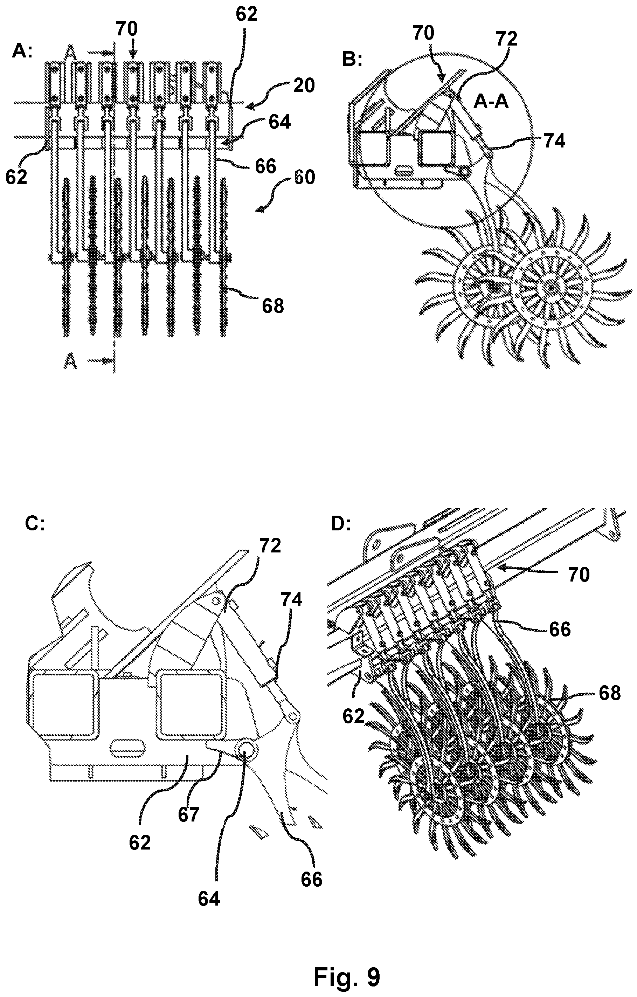

Fig. 9 illustrates a second embodiment of a hoe rack 60 from four different views. The hoe rack 60 is positioned along a tool bar 20.

The hoe rack 60 comprises a pair of extension plates 62 having a rod 64 extending between the pair of extension plates 62, the rod 64 being substantially parallel to the tool bar 20.

The hoe rack 60 further comprises hoe arms 66 rotatably connected to the rod 62 and distal to the rod 62 being connected to rotary hoes 68.

The hoe arms 66 of the hoe rack 60 comprise anvils 67 extending below the tool bar 20, the anvils 67 are adapted for engaging with the tool bar 20. Thereby, unwanted clockwise rotation is prevented.

The hoe rack 60 further comprises a biasing system 70 for applying a biasing force to the one or more hoe arms 66 and the one or more rotary hoes 68.

The biasing system 70 together with the anvils 67 ensures that rotary hoes 68 do not collide, if the tool bar 20 is of the kind which can be folded and unfolded.

The biasing system 70 comprises biasing arms 72 extending from above the tool bar 20. The biasing arms 72 have displaceable hand ends 74 connected to hoe arms 66 for applying the biasing force to the hoe arms 66.

The hoe arms 66 have an upwardly extending protrusion for engaging with the displaceable hand ends 74.

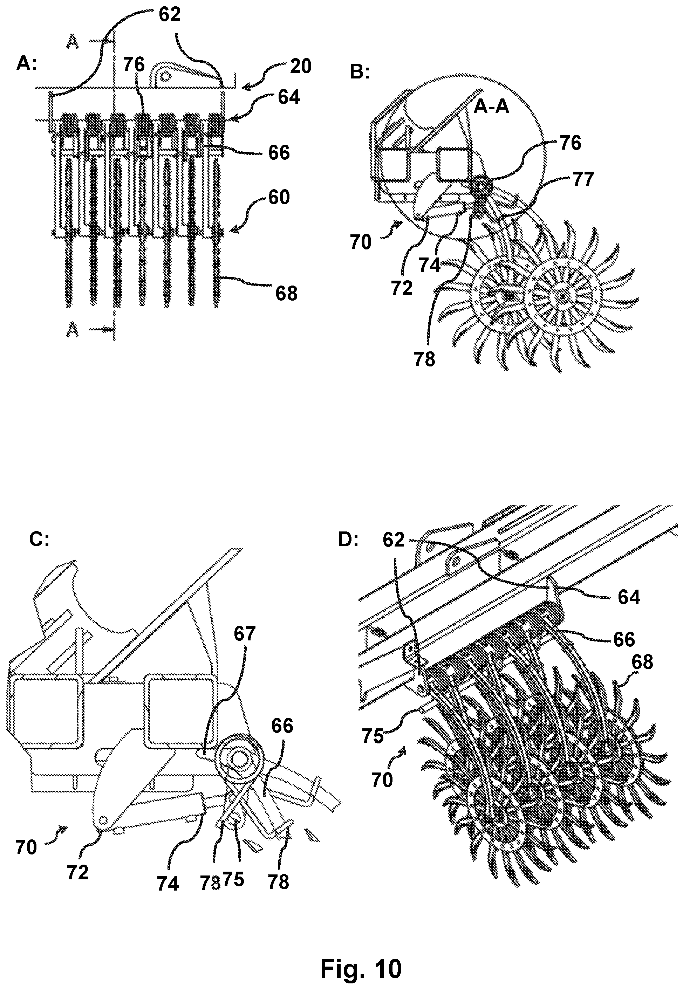

Fig. 10 illustrates a third embodiment of a hoe rack 60. The hoe rack 60 is positioned along a tool bar 20.

The hoe rack 60 comprises a pair of extension plates 62 having a rod 64 extending between the pair of extension plates 62, the rod 64 being substantially parallel to the tool bar 20.

The hoe rack 60 further comprises hoe arms 66 rotatably connected to the rod 62 and distal to the rod 62 being connected to rotary hoes 68.

The hoe arms 66 of the hoe rack 60 comprise anvils 67 extending below the tool bar 20, the anvils 67 are adapted for engaging with the tool bar 20. Thereby, unwanted clockwise rotation is prevented.

The hoe rack 60 further comprises a biasing system 70 for applying a biasing force to the one or more hoe arms 66 and the one or more rotary hoes 68.

The biasing system 70 together with the anvils 67 ensures that rotary hoes 68 dot no collide, if the tool bar 20 is of the kind which can be folded and unfolded.

The biasing system 70 comprises torque springs 76 positioned next to the hoe arms 66 along the rod 64. The torque springs 76 have a first torque spring arm 77 connected to a hoe arm 66 and a second torque spring arm 78.

The biasing system 70 further comprises a biasing arm 72 extending from below the tool bar 20 and having a displaceable hand end 74 connected to a pole 75 positioned transverse to the second torque spring arms 78 for applying a biasing force to the one or more torque springs 76.

The biasing arm 72 further comprises an intermediate piece 79 between the hand end 74 and the pole 75, the intermediate piece 79 being rotatable connected to the rod 64.

The intermediate piece 79 comprises a curved part, where the biasing arm 72 is rotatably connected to a first end of said curved part and the pole 75 is connected to an opposite end of said curved part and the curved part partly encircles the rod 64.

The effect of the intermediate piece 79 having a curved shaped is that it becomes easier to control the biasing force on the torque springs 76 as the pole 75 will apply a force on the substantially same place on the second torque spring arms 78.

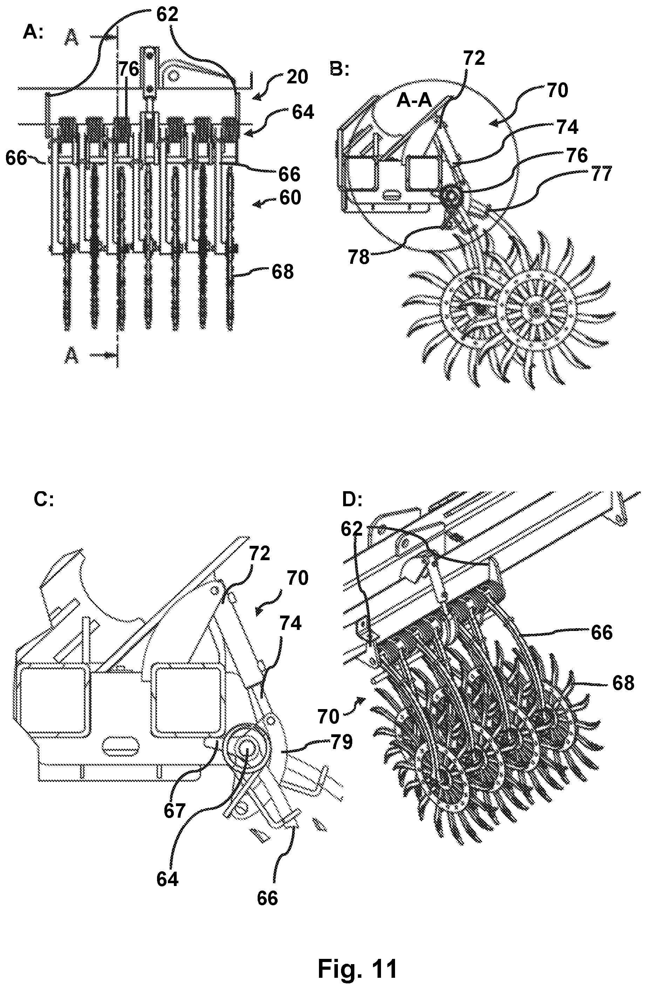

Fig. 11 illustrates a fourth embodiment of a hoe rack 60. The hoe rack 60 is positioned along a tool bar 20.

The hoe rack 60 comprises a pair of extension plates 62 having a rod 64 extending between the pair of extension plates 62, the rod 64 being substantially parallel to the tool bar 20.

The hoe rack 60 further comprises hoe arms 66 rotatably connected to the rod 62 and distal to the rod 62 being connected to rotary hoes 68.

The hoe arms 66 of the hoe rack 60 comprise anvils 67 extending below the tool bar 20, the anvils 67 are adapted for engaging with the tool bar 20. Thereby, unwanted clockwise rotation is prevented.

The hoe rack 60 further comprises a biasing system 70 for applying a biasing force to the one or more hoe arms 66 and the one or more rotary hoes 68.

The biasing system 70 together with the anvils 67 ensures that rotary hoes 68 do not collide, if the tool bar 20 is of the kind which can be folded and unfolded.

The biasing system 70 comprises torque springs 76 positioned next to the hoe arms 66 along the rod 64. The torque springs 76 have a first torque spring arm 77 connected to a hoe arm 66 and a second torque spring arm 78.

The biasing system 70 further comprises a biasing arm 72 extending from above the tool bar 20 and having a displaceable hand end 74 connected to a pole 75 positioned transverse to the second torque spring arms 78 for applying a biasing force to the one or more torque springs 76.

The biasing arm 72 further comprises an intermediate piece 79 between the hand end 74 and the pole 75, the intermediate piece 79 being rotatable connected to the rod 64. The intermediate piece 79 comprises a curved part, where the biasing arm 72 is rotatably connected to a first end of said curved part and the pole 75 is connected to an opposite end of said curved part and the curved part partly encircles the rod 64.

The effect of the intermediate piece 79 having a curved shaped is that it becomes easier to control the biasing force on the torque springs 76 as the pole 75 will apply a force on the substantially same place on the second torque spring arms 78.

## Claims

1. A rotary hoe arrangement (10) for weeding a field, the rotary hoe arrangement (10) comprising
- a tool bar (20) comprising a plurality of hoe wheels (30) along the tool bar (20), two foldable wing sections (40I, 40II) divided by a central bar (25), each wing section (40I, 40II) comprises an inner wing (42I, 42II) connected to an outer wing (44I, 44II) having a distal wing end (45I, 45II),
- the tool bar (20) having an operational position (22), where the central bar (25), inner wings (42) and outer wings (44) define a straight work line (50), and a folded position (24) where the wing sections (40I, 40II) are folded for transportation to and from a field,
- each inner wing (42I, 42II) being pivotably engaged with the central bar (25), each inner wing (42I, 42II) pivots in an inner plane between an inner operational position, where the inner wing (42I, 42II) extends along the straight work line (50), and an inner folded position, where the inner wing (42I, 42II) extends vertically upwardly and substantially perpendicularly to the straight work line (50), **characterised in that**
- each outer wing (44I, 44II) being pivotably engaged with the corresponding inner wing (42I, 42II), each outer wing (44I, 44II) pivots in an outer plane (48I, 48II) being tilted relative to the corresponding inner plane between an outer operational position, where the outer wing (44I, 44II) extends along the straight work line (50), and an outer folded position, where the distal wing end (45I, 45II) substantially faces the central bar (25) and the outer wing (44I, 44II) is parallel to the corresponding inner wing (44I, 44II) and positioned upwardly in the outer plane, and where each outer plane (48I, 48II) forms a 35-55 degree angle with the corresponding inner plane.

2. The rotary hoe arrangement (10) according to claim 1, **characterised in that** the central bar (25) has a central bar width adapted for forming an equipment space (90) between the wing sections (40I, 40II).

3. The rotary hoe arrangement (10) according to claim 2, **characterised in that** the rotary hoe arrangement (10) comprises a sowing machine (80) positioned in the equipment space (90).

4. The rotary hoe arrangement (10) according to one or more of claims 1-3 **characterised in that** each outer plane forms a 38-48-degree, about 41-45-degree or 43-degree angle with the corresponding inner plane.

5. The rotary hoe arrangement (10) according to one or more of claims 1-4, **characterised in that** the tool bar (20) comprises a hoe rack (60), the hoe rack (60) comprising
- a pair of extension plates (62) having a rod (64) extending between the pair of extension plates (62), the rod (64) being substantially parallel to the tool bar (20),
- one or more hoe arms (66) being rotatably connected to the rod (62) and distal to the rod (62) being connected to one or more rotary hoes (68),
- a biasing system (70) for applying a biasing force to the one or more hoe arms (66) and the one or more rotary hoes (68).

6. The rotary hoe arrangement (10) according to claim 5, **characterised in that** the one or more hoe arms (66) of the hoe rack (60) comprise one or more anvils (67) extending below the tool bar (20), the one or more anvils (67) being adapted for engaging with the tool bar (20).

7. The rotary hoe arrangement (10) according to one or more of claims 5-6, **characterised in that** the biasing system (70) comprise one or more biasing arms (72) extending from the tool bar (20) and having a displaceable hand end (74) connected to the hoe arms (66).

8. The rotary hoe arrangement (10) according to one or more of claims 5-6, **characterised in that** the biasing system (70) comprising
- one or more torque springs (76) positioned next to hoe arms (66) along the rod (64), the one or more torque springs (76) having a first torque spring arm (77) connected to a hoe arm (66) and a second torque spring arm (78),
- a biasing arm (72) extending from the tool bar (20) and having a displaceable hand end (74) connected to a pole (75) positioned transverse to the second torque spring arms (78) for applying a biasing force to the one or more torque springs (76).

9. The rotary hoe arrangement (10) according claim 8, **characterised in that** the biasing arm (72) further comprises an intermediate piece (79) between the hand end (74) and the pole (75), the intermediate piece (79) being rotatably connected to the rod (64).

10. The rotary hoe arrangement (10) according claim 9, **characterised in that** the intermediate piece (79) comprises a curved part, where the biasing arm (72) is rotatably connected to a first end of said curved part and the pole 75 is connected to an opposite end of said curved part and the curved part partly encircles the rod (64).

11. The rotary hoe arrangement (10) according to any one of claims 7-10, **characterised in that** the hand end (74) is displaceable by using pneumatics or hydraulics or an electrified actuator or a membrane.

12. A system comprising a vehicle (100) and a rotary hoe arrangement (10), according to one or more of claims 1-11, wherein the vehicle (100) is connected to the rotary hoe arrangement (10)

13. Use of a rotary hoe arrangement (10) according to one or more of claims 1-11, for weeding a field.

14. Use of a rotary hoe arrangement (10) according to claim 3, for weeding and sowing a field at the same time.

15. Use of a system, according to claim 12, for weeding a field.

## Patentansprüche

1. Drehhackanordnung (10) zum Jäten eines Feldes, wobei die Drehhackanordnung (10) Folgendes umfasst
- eine Werkzeugleiste (20), umfassend eine Vielzahl von Hackrädern (30) entlang der Werkzeugleiste (20), zwei faltbare Flügelabschnitte (401, 40II), die durch eine Mittelleiste (25) unterteilt sind, wobei jeder Flügelabschnitt (401, 40II) einen Innenflügel (42I, 42II) umfasst, der mit einem Außenflügel (44I, 44II) verbunden ist, der ein distales Flügelende (45I, 45II) aufweist,
- wobei die Werkzeugleiste (20) eine Betriebsposition (22), in der die Mittelleiste (25), die Innenflügel (42) und die Außenflügel (44) eine gerade Arbeitslinie (50) definieren, und eine gefaltete Position (24), in der die Flügelabschnitte (40I, 40II) zum Transport zu und von einem Feld gefaltet sind, aufweist,
- wobei jeder Innenflügel (42I, 42II) schwenkbar mit der Mittelleiste (25) in Eingriff steht, wobei jeder Innenflügel (42I, 42II) in einer Innenebene zwischen einer inneren Betriebsposition, in der sich der Innenflügel (42I, 42II) entlang der geraden Arbeitslinie (50) erstreckt, und einer inneren gefalteten Position, in der sich der Innenflügel (42I, 42II) vertikal nach oben und im Wesentlichen senkrecht zu der geraden Arbeitslinie (50) erstreckt, schwenkt, **dadurch gekennzeichnet, dass**
- jeder Außenflügel (44I, 44II) schwenkbar mit dem entsprechenden Innenflügel (42I, 42II) in Eingriff steht, wobei jeder Außenflügel (44I, 44II) in einer Außenebene (48I, 48II), die relativ zu der entsprechenden Innenebene geneigt ist, zwischen einer äußeren Betriebsposition, in der sich der Außenflügel (44I, 44II) entlang der geraden Arbeitslinie (50) erstreckt, und einer äußeren gefalteten Position, in der das distale Flügelende (45I, 45II) im Wesentlichen der Mittelleiste (25) zugewandt ist und der Außenflügel (44I, 44II) parallel zu dem entsprechenden Innenflügel (44I, 44II) liegt und in der Außenebene nach oben positioniert ist, schwenkt und wobei jede Außenebene (48I, 48II) mit der entsprechenden Innenebene einen Winkel von 35-55 Grad bildet.

2. Drehhackanordnung (10) nach Anspruch 1, **dadurch gekennzeichnet, dass** die Mittelleiste (25) eine Mittelleistenbreite aufweist, die zum Bilden eines Ausrüstungsraums (90) zwischen den Flügelabschnitten (401, 40II) angepasst ist.

3. Drehhackanordnung (10) nach Anspruch 2, **dadurch gekennzeichnet, dass** die Drehhackanordnung (10) eine in dem Ausrüstungsraum (90) positionierte Sämaschine (80) umfasst.

4. Drehhackanordnung (10) nach einem oder mehreren der Ansprüche 1-3, **dadurch gekennzeichnet, dass** jede Außenebene mit der entsprechenden Innenebene einen Winkel von 38-48 Grad, etwa 41-45 Grad oder 43 Grad, bildet.

5. Drehhackanordnung (10) nach einem oder mehreren der Ansprüche 1-4, **dadurch gekennzeichnet, dass** die Werkzeugleiste (20) einen Hackrechen (60) umfasst, wobei der Hackrechen (60) Folgendes umfasst
- ein Paar von Verlängerungsplatten (62), das eine Stange (64) aufweist, die sich zwischen dem Paar von Verlängerungsplatten (62) erstreckt, wobei die Stange (64) im Wesentlichen parallel zu der Werkzeugleiste (20) liegt,
- einen oder mehrere Hackarme (66), die drehbar mit der Stange (62) und distal von der Stange (62) verbunden sind, die mit einem oder mehreren Drehhackern (68) verbunden sind,
- ein Vorspannsystem (70) zum Aufbringen einer Vorspannkraft auf den einen oder die mehreren Hackarme (66) und den einen oder die mehreren Drehhacker (68).

6. Drehhackanordnung (10) nach Anspruch 5, **dadurch gekennzeichnet, dass** der eine oder die mehreren Hackarme (66) des Hackrechens (60) einen oder mehrere sich unterhalb der Werkzeugleiste (20) erstreckende Ambosse (67) umfassen, wobei der eine oder die mehreren Ambosse (67) zum Eingreifen in die Werkzeugleiste (20) angepasst sind.

7. Drehhackanordnung (10) nach einem oder mehreren der Ansprüche 5-6, **dadurch gekennzeichnet, dass** das Vorspannsystem (70) einen oder mehrere Vorspannarme (72) umfasst, die sich von der Werkzeugleiste (20) erstrecken und ein verschiebbares Handende (74) aufweisen, das mit den Hackarmen (66) verbunden ist.

8. Drehhackanordnung (10) nach einem oder mehreren der Ansprüche 5-6, **dadurch gekennzeichnet, dass** das Vorspannsystem (70) Folgendes umfasst
- eine oder mehrere Drehmomentenfedern (76), die neben Hackarmen (66) entlang der Stange (64) positioniert sind, wobei die eine oder mehreren Drehmomentenfedern (76) einen ersten Drehmomentenfederarm (77), der mit einem Hackarm (66) verbunden ist, und einen zweiten Drehmomentenfederarm (78) aufweisen,
- einen Vorspannarm (72), der sich von der Werkzeugleiste (20) erstreckt und ein verschiebbares Handende (74) aufweist, das mit einem quer zu den zweiten Drehmomentfederarmen (78) positionierten Stab (75) verbunden ist, um eine Vorspannkraft auf die eine oder mehreren Drehmomentfedern (76) aufzubringen.

9. Drehhackanordnung (10) nach Anspruch 8, **dadurch gekennzeichnet, dass** der Vorspannarm (72) ferner ein Zwischenstück (79) zwischen dem Handende (74) und dem Stab (75) umfasst, wobei das Zwischenstück (79) drehbar mit der Stange (64) verbunden ist.

10. Drehhackanordnung (10) nach Anspruch 9, **dadurch gekennzeichnet, dass** das Zwischenstück (79) einen gekrümmten Teil umfasst, wobei der Vorspannarm (72) drehbar mit einem ersten Ende des gekrümmten Teils verbunden ist und der Stab (75) mit einem gegenüberliegenden Ende des gekrümmten Teils verbunden ist und der gekrümmte Teil die Stange (64) teilweise umgibt.

11. Drehhackanordnung (10) nach einem der Ansprüche 7-10, **dadurch gekennzeichnet, dass** das Handende (74) unter Verwendung von Pneumatik oder Hydraulik oder eines elektrifizierten Aktuators oder einer Membran verschiebbar ist.

12. System, umfassend ein Fahrzeug (100) und eine Drehhackanordnung (10) nach einem oder mehreren der Ansprüche 1-11, wobei das Fahrzeug (100) mit der Drehhackanordnung (10) verbunden ist

13. Verwendung einer Drehhackanordnung (10) nach einem oder mehreren der Ansprüche 1-11 zum Jäten eines Feldes.

14. Verwendung einer Drehhackanordnung (10) nach Anspruch 3 zum gleichzeitigen Jäten und Ansäen eines Feldes.

15. Verwendung eines Systems nach Anspruch 12 zum Jäten eines Feldes.

## Revendications

1. Arrangement de houe rotative (10) pour désherber un champ, l'arrangement de houe rotative (10) comprenant
- une barre à outils (20) comprenant une pluralité de roues de houe (30) le long de la barre à outils (20), deux sections d'ailes pliables (401, 40II) divisées par une barre centrale (25), chaque section d'aile (40I, 40II) comprend une aile interne (421, 4211) reliée à une aile externe (441, 44II) ayant une extrémité d'aile distale (45I, 45II),
- la barre à outils (20) ayant une position de fonctionnement (22), dans laquelle la barre centrale (25), les ailes internes (42) et les ailes externes (44) définissent une ligne de travail droite (50), et une position de repliement (24) dans laquelle les sections d'ailes (401, 40II) sont repliées pour le transport vers et en provenance d'un champ,
- chaque aile interne (421, 42II) étant en prise de manière pivotante avec la barre centrale (25), chaque aile interne (421, 4211) pivote dans un plan interne entre une position de fonctionnement interne, dans laquelle l'aile interne (421, 42II) s'étend le long de la ligne de travail droite (50), et une position de repliement interne, dans laquelle l'aile interne (421, 4211) s'étend verticalement vers le haut et sensiblement perpendiculairement à la ligne de travail droite (50), **caractérisé en ce que**
- chaque aile externe (441, 4411) étant en prise de manière pivotante avec l'aile interne correspondante (421, 4211), chaque aile externe (441, 44II) pivotant dans un plan externe (481, 48II) incliné par rapport au plan interne correspondant entre une position de fonctionnement externe, dans laquelle l'aile externe (441, 44II) s'étend le long de la ligne de travail droite (50), et une position repliée externe, dans laquelle l'extrémité d'aile distale (45I, 45II) fait sensiblement face à la barre centrale (25) et l'aile externe (441, 4411) est parallèle à l'aile interne correspondante (441, 4411) et positionnée vers le haut dans le plan externe, et dans laquelle chaque plan externe (481, 48II) forme un angle de 35 à 55 degrés avec le plan interne correspondant.

2. Arrangement de houe rotative (10) selon la revendication 1, **caractérisé en ce que** la barre centrale (25) présente une largeur de barre centrale adaptée pour former un espace d'équipement (90) entre les sections d'ailes (40I, 40II).

3. Arrangement de houe rotative (10) selon la revendication 2, **caractérisé en ce que** l'arrangement de houe rotative (10) comprend un semoir (80) positionné dans l'espace d'équipement (90).

4. Arrangement de houe rotative (10) selon une ou plusieurs des revendications 1 à 3 **caractérisé en ce que** chaque plan externe forme un angle de 38 à 48 degrés, d'environ 41 à 45 degrés ou de 43 degrés avec le plan interne correspondant.

5. Arrangement de houe rotative (10) selon une ou plusieurs des revendications 1 à 4, **caractérisé en ce que** la barre à outils (20) comprend un support de houe (60), le support de houe (60) comprenant
- une paire de plaques d'extension (62) ayant une tige (64) s'étendant entre la paire de plaques d'extension (62), la tige (64) étant sensiblement parallèle à la barre à outils (20),
- un ou plusieurs bras de houe (66) reliés en rotation à la tige (62) et, distalement par rapport à la tige (62), reliés à une ou plusieurs houes rotatives (68),
- un système de sollicitation (70) permettant d'appliquer une force de sollicitation à un ou plusieurs bras de houe (66) et à la ou les houes rotatives (68).

6. Arrangement de houe rotative (10) selon la revendication 5, **caractérisé en ce que** le ou les bras de houe (66) du support de houe (60) comprennent une ou plusieurs enclumes (67) s'étendant sous la barre à outils (20), la ou les enclumes (67) étant adaptées pour venir en prise avec la barre à outils (20).

7. Arrangement de houe rotative (10) selon une ou plusieurs des revendications 5 à 6, **caractérisé en ce que** le système de sollicitation (70) comprend un ou plusieurs bras de sollicitation (72) s'étendant à partir de la barre à outils (20) et ayant une extrémité de main déplaçable (74) reliée aux bras de houe (66).

8. Arrangement de houe rotative (10) selon une ou plusieurs des revendications 5 à 6, **caractérisé en ce que** le système de sollicitation (70) comprend
- un ou plusieurs ressorts antagonistes (76) positionnés à côté des bras de houe (66) le long de la tige (64), le ou les ressorts antagonistes (76) ayant un premier bras de ressort antagoniste (77) relié à un bras de houe (66) et un second bras de ressort antagoniste (78),
- un bras de sollicitation (72) s'étendant à partir de la barre à outils (20) et ayant une extrémité de main déplaçable (74) reliée à un talon (75) positionné transversalement aux seconds bras de ressort antagoniste (78) pour appliquer une force de sollicitation auxdits un ou plusieurs ressorts antagonistes (76).

9. Arrangement de houe rotative (10) selon la revendication 8, **caractérisé en ce que** le bras de sollicitation (72) comprend également une pièce intermédiaire (79) entre l'extrémité de main (74) et le talon (75), la pièce intermédiaire (79) étant reliée en rotation à la tige (64).

10. Arrangement de houe rotative (10) selon la revendication 9, **caractérisé en ce que** la pièce intermédiaire (79) comprend une partie incurvée, dans lequel le bras de sollicitation (72) est relié en rotation à une première extrémité de ladite partie incurvée et le talon (75) est relié à une extrémité opposée de ladite partie incurvée et la partie incurvée encercle en partie la tige (64).

11. Arrangement de houe rotative (10) selon l'une quelconque des revendications 7 à 10, **caractérisé en ce que** l'extrémité de main (74) peut être déplacée à l'aide de moyens pneumatiques ou hydrauliques ou d'un actionneur électrifié ou d'une membrane.

12. Système comprenant un véhicule (100) et un arrangement de houe rotative (10), selon une ou plusieurs des revendications 1 à 11, dans lequel le véhicule (100) est relié à l'arrangement de houe rotative (10).

13. Utilisation d'un arrangement de houe rotative (10) selon une ou plusieurs des revendications 1 à 11, pour désherber un champ.

14. Utilisation d'un arrangement de houe rotative (10) selon la revendication 3, pour désherber et semer un champ en même temps.

15. Utilisation d'un système, selon la revendication 12, pour désherber un champ.
